# EUROPÄISCHE PATENTANMELDUNG

(11) **EP 4 372 716 A1**
(43) Veröffentlichungstag der Anmeldung: **22.05.2024**
(21) Anmeldenummer: 23210638.5
(22) Anmeldetag: 17.11.2023
(51) Int. Cl.: G08G 1/0962, B60Q 1/26, G08G 1/00, G01C 21/34

(54) **VERFAHREN ZUM BETÄTIGEN WENIGSTENS EINER AUSGABEEINHEIT, MELDESYSTEM FÜR WENIGSTENS EIN BEGLEITFAHRZEUG, BEGLEITFAHRZEUG UND FAHRZEUGVERBAND**

(30) Priorität: 18.11.2022 DE 102022130587
(71) Anmelder: Sommer, Helga, 48477 Hörstel (DE)
(72) Erfinder: Sommer, Helga, 48477 Hörstel (DE)
(74) Vertreter: Jeon, Jin

(57) **Zusammenfassung**

Bereitgestellt wird ein Verfahren zum Betätigen wenigstens einer Ausgabeeinheit wenigstens eines Begleitfahrzeugs aus einem Fahrzeugverband mit einem Transportfahrzeug, während der Fahrzeugverband entlang einer vorbestimmten Strecke verkehrt, die vorbestimmte Stellen umfasst, denen mit dem wenigstens einen Begleitfahrzeug assoziierte Orts- und/oder Statusvorgaben zugeordnet sind. Eine mit dem Transportfahrzeug assoziierte Orts- und/oder Statusangabe wird erfasst. Für das Begleitfahrzeug wird wenigstens eine Orts- und/oder Statusvorgabe abhängig von der mit dem Transportfahrzeug assoziierten Orts- und/oder Statusangabe und den vorbestimmten Stellen selektiert. Wenigstens eine an und/oder in dem Begleitfahrzeug angeordnete Ausgabeeinheit wird veranlasst, eine zu der selektierten Orts- und/oder Statusvorgabe korrespondierende, visuelle und/oder akustische Meldung auszugeben.

## Beschreibung

Die Erfindung betrifft ein Verfahren zum Betätigen wenigstens einer Ausgabeeinheit wenigstens eines Begleitfahrzeugs aus einem Fahrzeugverband mit einem Transportfahrzeug. Die Erfindung betrifft auch ein Meldesystem für wenigstens ein Begleitfahrzeug in einem entlang einer vorbestimmten Strecke verkehrenden Fahrzeugverband mit einem Transportfahrzeug. Die Erfindung betrifft ferner ein Begleitfahrzeug in einem Fahrzeugverband mit einem Transportfahrzeug sowie einen Fahrzeugverband, der ein Transportfahrzeug und wenigstens ein Begleitfahrzeug oder mehrere Begleitfahrzeuge umfasst.

Aus dem Stand der Technik sind Navigationssysteme für den herkömmlichen Straßenverkehr bekannt. Solche Navigationssysteme erkennen eine aktuelle Position eines Verkehrsteilnehmers und führen ihn von der aktuellen Position einem Zielpunkt, der von dem Verkehrsteilnehmer gewählt wird. Als Ein- und Ausgabeeinheit dient hierbei im Allgemeinen eine Navigationsassistenzeinheit mit einem Touch-Display, das in der Fahrzeugkabine angeordnet ist und in dem Fahrzeug, beispielsweise dessen Armaturenbrett, baulich integriert oder lösbar in einer Halterung getragen sein kann.

Vom herkömmlichen Straßenverkehr unterscheiden sich Großraum- und Schwerlasttransporte (GST) durch Schwertransportdaten, die gesetzliche oder sonstige vorgeschriebene Zulassungsbedingungen für die Teilnahme am herkömmlichen Straßenverkehr nicht erfüllen. In der Bundesrepublik Deutschland sind diese Zulassungsbedingungen durch die Straßenverkehrs- und Zulassungsverordnung (StVO) geregelt, insbesondere durch § 32 betreffend Abmessungen und § 34 betreffend Gewicht und Einzelachslast. Das Transportfahrzeug im Sinne der vorliegenden Offenbarung kann den Großraumtransport, den Schwertransport, den Großraum- und Schwertransport und/oder den Langtransport gemäß den Bestimmungen der StVZO betreffen. Sofern nicht anders angegeben, wird der Begriff Transport in der vorliegenden Offenbarung zusammenfassend für den Großraumtransport, den Schwerlasttransport, den Großraum- und Schwerlasttransport und den Langtransport verwendet. Mit Transportfahrzeug kann im Allgemeinen ein Schwertransportfahrzeug bezeichnet sein. Die Schwertransportdaten, insbesondere betreffend die Höhe, die Breite, die Länge, das Gesamtgewicht oder die Einzelachslast, können sich auf das Transportfahrzeug, auf das Transportgut oder auf die Kombination von beiden beziehen.

Verkehrsbauwerke wie beispielsweise Straßen, Brücken, Tunnel, Unterführungen, Zufahrten, Kreuzungen, Straßen mit Verkehrsinseln, Kreisverkehr und dergleichen sind in der Regel für den herkömmlichen Straßenverkehr ausgelegt. Dort gelten für den Schwerlasttransport besondere Regeln.

Ein Navigationssystem für den Schwertransport ist in DE 20 2021 102 980 U1 beschrieben. Das Schwertransport-Navigationssystem umfasst eine in dem Transportfahrzeug angeordnete Ausgabeeinheit zur Ausgabe einer visuellen und/oder akustischen Warnmeldung. Die Warnmeldung wird ausgegeben, wenn das Navigationssystem eine von der vorgegebenen Strecke abweichende Position des Schwertransportfahrzeugs erkennt. Beim Verkehren des Schwerlasttransportfahrzeugs entlang der vorgegebenen Strecke können über die Ausgabeeinheit anstelle einer Warnmeldung eine Fahranweisung für den Fahrer oder die Fahrerin des Schwerlasttransports erfolgen, um sie entlang der vorgegebenen Strecke zu führen. Das Navigationssystem kann zudem dazu eingerichtet sein, den Fahrer oder die Fahrerin des Schwerlasttransportes beim Befahren entlang der vorgegebenen Strecke auf besondere Ereignisse hinzuweisen, beispielsweise in Zusammenhang mit dem Passieren bestimmter Verkehrsbauwerke.

Um die Sicherheit für Schwerlasttransporte und andere Verkehrsteilnehmer zu erhöhen, werden Schwerlasttransportfahrzeuge (kurz: Transportfahrzeuge) üblicherweise von einem Begleitfahrzeug oder mehreren Begleitfahrzeugen begleitet. Mithilfe des Begleitfahrzeugs oder der Begleitfahrzeuge erfolgt ein besonderes Kenntlichmachen des Schwerlasttransports. Der Schwerlasttransportfahrzeug und dessen Begleitfahrzeug oder Begleitfahrzeuge bilden einen Fahrzeugverband. Das wenigstens ein Begleitfahrzeug kann zur Wahrnehmung hilfspolizeilicher Aufgaben ersetzt werden. Beispielsweise können mit einem Begleitfahrzeug Verkehrszeichen für andere, insbesondere nachfolgende und/oder entgegenkommende, Verkehrsteilnehmer angezeigt werden. Zusätzlich oder alternativ kann ein Begleitfahrzeug dazu eingesetzt werden, einen Zufahrtsweg zu der vorbestimmten Strecke, auf welcher sich der Schwerlasttransport bewegt, zeitweise zu versperren.

Für die Bundesrepublik Deutschland ist als rechtliches Rahmenwerk zur Ergänzung der StVO und der StVZO eine Straßentransportbegleitverordnung (StTbV) in Vorbereitung. In einigen Bundesländern, wie Bayern, existieren vorbestimmte Verkehrsregelpläne, um für diverse standardisierte Straßensituationen Vorgaben zu definieren, die durch den Schwerlasttransportverband umzusetzen sind. Dadurch soll für alle Verkehrsteilnehmer eine möglichst sichere der Situation geschaffen werden.

Jedes Begleitfahrzeug wird üblicherweise als Besatzung einen Fahrer und einen Beifahrer haben. An die Ausbildung, Tauglichkeit und hinsichtlich zusätzlicher streckenspezifischer Einweisung werden an die Besatzung hohe Anforderungen gestellt. Es stellt für Speditionen eine Schwierigkeit dar, eine ausreichend hohe Anzahl an anforderungsgerechtes Personal für die hohe Zahl erforderlicher Schwertransporte, beispielsweise im Zuge der Errichtung von Windenergieanlagen für die Energiewende, zu finden. Außerdem geht mit den Aufgaben für die Begleitfahrzeug-Besatzung beim Verrichten eines Schwerlasttransports entlang einer vorgegebenen Strecke eine hohe Belastung einher, sodass es wünschenswert ist, Entlastungen für die Besatzung bereitzustellen. Infolge von Fehlern der Besatzung kann die Sicherheit des Schwerlasttransports und anderer Verkehrsteilnehmer gefährdet werden.

DE 101 37 001 A1 beschreibt ein Navigationssystem für Schwertransporte zur Navigation von einem Ausgangsort zu einem Navigationsziel, mit einer Navigationseinheit, einer Speichereinheit mit zumindest einem Speichermedium, einer Ausgabeeinheit und einer Eingabeeinheit, vorgeschlagen. Dieses zeichnet sich dadurch aus, dass die Eingabeeinheit eine Schnittstelle zur Eingabe von zwischen Ausgangsort und Navigationsziel gelegenen Wegpunkten und diesen zugeordneten sicherheitsrelevanten Daten aufweist und ortsbezogen ausgeben kann.

DE 20 2021 102 980 U1 beschreibt ein Navigationssystem für einen Schwertransport, das folgendes umfasst: eine Speichereinheit zum Speichern einer vorgegebenen Strecke für den Schwertransport und zum Speichern eines ersten Distanzschwellwertes; eine Positionserfassungseinheit zum Erfassen einer Position des Schwertransports in kartographischem Raum; eine Prozessoreinheit zum Berechnen einer Distanz der Position des Schwertransports von der vorgegebenen Strecke und zum Vergleichen der Distanz mit dem ersten Distanzschwellwert; und eine Ausgabeeinheit eingerichtet zur Ausgabe einer Warnmeldung, falls das Vergleichen durch die Prozessoreinheit ergibt, dass die Distanz den ersten Distanzschwellwert überschreitet, wobei die Ausgabe der Warnmeldung visuell und/oder akustisch erfolgt.

CN 1 11 327 652 A offenbart ein Verfahren und System zur Verwaltung von Fahrten einer Fahrzeugkolonne, die aus einer Vielzahl von Fahrzeugen mit einem vorgegebenen Ziel besteht. In der Fahrzeugkolonne wird vorab ein Administrator ausgewählt. Der Administrator sendet eine Gruppenbildungsanfrage, um eine Verwaltungsgruppe zur Verwaltung der Fahrzeugkolonne einzurichten. Im Anschluss, werden alle Fahrzeuge in der Verwaltungsgruppe in Echtzeit überwacht und entsprechende überwacht.

Ist eine Aufgabe der Erfindung, ein Verfahren zum Betätigen wenigstens einer Ausgabeeinheit eines Begleitfahrzeugs, ein Meldesystem für wenigstens ein Begleitfahrzeug in einem Fahrzeugverband mit einem Transportfahrzeug, ein speziell eingerichtetes Begleitfahrzeug sowie einen Transportverband mit einem Transportfahrzeug und einem Begleitfahrzeug oder mehreren Begleitfahrzeugen bereitzustellen, welches die Nachteile des Stands der Technik überwindet, insbesondere die Besatzung eines Begleitfahrzeugs einen Schwerlasttransportverband bei der Wahrnehmung ihrer Aufgaben unterstützt, vorzugsweise eine Entlastung für die Besatzung bereitstellt und/oder Fehler vermeidet.

Diese Aufgabe wird gelöst durch den Gegenstand der unabhängigen Ansprüche.

Demnach ist ein Verfahren vorgesehen zum Betätigen wenigstens einer Ausgabeeinheit wenigstens eines Begleitfahrzeugs aus einem Fahrzeugverband mit einem Transportfahrzeug während der Fahrzeugverband entlang einer vorbestimmten Strecke verkehrt, welche vorbestimmte Stellen umfasst, denen mit der mindestens einen Begleitfahrzeug assoziierten Orts- und oder Statusvorgaben zugeordnet sind.

Die vorbestimmte Strecke kann optional zusätzliche vorbestimmte Streckenabschnitte umfassen, denen keine mit dem wenigstens einen Begleitfahrzeug assoziierte Orts- und/oder Statusvorgaben zugeordnet sind, oder denen mit dem wenigstens einen Begleitfahrzeug assoziierte passive Orts- und/oder Statusvorgaben zugeordnet sind.

Vorbestimmte Stellen entlang der vorbestimmten Strecke könnte beispielsweise einseitige Straßeneimündungen, Kreuzungen, Verkehrsinseln, Kreisverkehr oder andere Straßensituation mit Beeinträchtigung eines kontinuierlichen, im Wesentlichen geradlinigen Straßenverlaufs, beispielsweise durch eine Krümmung des Straßenverlaufs und/oder eine geänderte Breite des Straßenverlaufs oder ein Hindernis entlang des Straßenverlaufs, beispielsweise oberhalb und/oder unterhalb des Straßenverlaufs, seitlich links und/oder rechts des Straßenverlaufs, definieren. Einer vorbestimmten Stelle kann wenigstens eine mit einem Begleitfahrzeug assoziierte Orts- und/oder Statusvorgabe zugeordnet sein. Beispielsweise kann ein an einer Stelle, wie einem Mündungsbereich, Kreisverkehr oder einer Kreuzung, als Ortsvorgabe für ein Begleitfahrzeug vorgegeben sein, wo dieses bestimmte Begleitfahrzeug (gegebenenfalls eines von mehreren Begleitfahrzeugen mit unterschiedlichen Rollen) zu positionieren ist. Als Ortsvorgaben kann bei einer vorbestimmten Stelle in Form einer einseitigen Straßeneinmündung vorbestimmt sein, dass ein bestimmtes Begleitfahrzeug zur zumindest teilweisen Sperrung in oder vor der Straßeneinmündung zu positionieren ist. Als eine mit einem Begleitfahrzeug assoziierte Statusvorgabe kann beispielsweise vorbestimmt sein, des Begleitfahrzeugs einen Hinweis auf den Schwerlasttransport und/oder ein Verkehrszeichen anzeigt, welches ähnlich oder gleichbedeutend mit einem "Einfahrt verboten" Hinweisschild zu positionieren sein kann.

Während der Durchführung des erfindungsgemäßen Verfahrens zum Betätigen wenigstens einer Ausgabeeinheit wird eine mit dem Transportfahrzeug assoziierte Orts- und/oder Statusangabe erfasst. Vorzugsweise erfolgt das Erfassen, während der Fahrzeugverband entlang der vorbestimmten Strecke verkehrt. Insbesondere kann eine aktuelle Position des Transportfahrzeugs als die mit dem Transportfahrzeug assoziierte Ortsangabe erfasst werden. Alternativ oder zusätzlich kann als eine mit dem Transportfahrzeug assoziierte Statusangabe erfasst werden, ob sich das Transportfahrzeug an einer der vorbestimmten Stellen von der vorbestimmten Strecke aufhält, sich daran annähert, davon entfernt und/oder sich nicht dort aufhält. Die Erfassung kann beispielsweise mittels eines mit dem Transportfahrzeug mitgeführten Signalgebers erfolgen. Alternativ ist denkbar, dass die Erfassung der Orts- und/oder Statusangabe durchgeführt wird durch eine Erfassungsvorrichtung, die von dem wenigstens einem Begleitfahrzeug oder einem anderen Teilnehmer des Fahrzeugverbandes mitgeführt wird. Zusätzlich oder alternativ kann vorgesehen sein, dass die Erfassung durch eine Erfassungseinheit erfolgt, welche sich fern des Transportverbandes befindet, etwa mittels eines Computer-Servers einer Navigationsleitzentrale, welche durch einen oder mehrere Computer, beispielsweise Cloudbasiert, implementiert sein kann.

Gemäß dem erfindungsgemäßen Verfahren wird für das wenigstens eine Begleitfahrzeug wenigstens eine Orts- und/oder Statusvorgabe abhängig von der mit dem Transportfahrzeug assoziierten Orts- und/oder Statusangabe und der vorbestimmten Stelle selektiert. Vorzugsweise erfolgt das Selektieren, während der Fahrzeugverband entlang der vorbestimmten Strecke verkehrt. Die Selektion kann beispielsweise durch einen an Bord des Transportfahrzeugs oder des wenigstens einen Begleitfahrzeugs mitgeführten Prozessoreinheit erfolgen, oder durch einen Prozessor, die sich in dem Fahrzeugverband befinden, oder von dem Fahrzeugverband entfernt angeordnete Prozessoren, beispielsweise in einem oder mehreren Computern oder einer Navigationsleitzentrale, oder einem internetbasierten oder Cloud-basierten System. Die Selektion kann beispielsweise erfolgen, indem der Status, etwa das Erreichen oder das Annähern, des Transportfahrzeugs an eine vorbestimmte Stelle anhand einer mit dem Transportfahrzeug assoziierten Ortsangabe oder einer Statusangabe identifiziert wird. Das Zuordnen wenigstens einer Orts- und/oder Statusvorgabe für wenigstens ein Begleitfahrzeug korrespondierend zu jeweiligen vorbestimmten Stelle erfolgt bevorzugt gemäß einem Verkehrszeichenplan. Das Selektieren von wenigstens einer Orts- und/oder Statusvorgabe entsprechend einer jeweiligen vorbestimmten Stelle für das wenigstens eine Begleitfahrzeug erfolgt bevorzugt gemäß einem Verkehrszeichenplan.

Bei dem erfindungsgemäßen Verfahren wird wenigstens eine an dem Begleitfahrzeug angeordnete Ausgabeeinheit und/oder wenigstens eine in dem Begleitfahrzeug angeordnete Ausgabeeinheit veranlasst, eine zu der selektierten Orts- und/oder Statusvorgabe korrespondierende, visuelle und/oder akustische Meldung auszugeben. Vorzugsweise erfolgt das Ausgeben, während der Fahrzeugverband entlang der vorbestimmten Strecke verkehrt. Die Meldung kann an die Besatzung, insbesondere einen Fahrer und/oder einen Beifahrer, des Begleitfahrzeugs adressiert sein. Alternativ kann eine Meldung adressiert sein an Verkehrsteilnehmer, die nicht dem Fahrzeugverband zugehörig sind oder an wenigstens einen anderen Teilnehmer des Fahrzeugverbands. Das Ausgeben einer visuellen Meldung kann beispielsweise durch eine aktivierbare Leuchte, beispielsweise eine blinkende Warnleuchte oder eine rotierende Warnleuchte, erfolgen. Alternativ oder zusätzlich kann das Ausgeben einer visuellen Meldung die Darstellung eines Verkehrszeichens umfassen. Zusätzlich oder alternativ kann das Ausgeben einer visuellen Meldung eine an die Besatzung eines Begleitfahrzeugs gerichtete Anweisungen zum Manövrieren des Begleitfahrzeugs in eine bestimmte Stellung innerhalb des Fahrzeugverbandes, insbesondere in Relation zu dem Transportfahrzeug und/oder wenigstens einem anderen Begleitfahrzeug, umfassen. Zusätzlich oder alternativ kann das Ausgeben einer visuellen und/oder akustischen Meldung umfassen, dass eine Anweisung an die Besatzung des wenigstens einen Begleitfahrzeugs hinsichtlich einer einzunehmen Position bezogen auf die aktuelle vorbestimmte Stelle entlang der vorbestimmten Strecke, etwa in oder vor einer Straßeneinmündung, oder auf einer bestimmten Seite einer Verkehrsinsel oder eines Kreisverkehrs, oder ähnliches umfassen. Es kann bevorzugt sein, dass mehrere an und/oder in dem Begleitfahrzeug, insbesondere mehreren Begleitfahrzeugen, angeordnete Ausgabeeinheiten veranlasst werden, zu der einen oder mehreren selektierten Orts- und/oder Statusvorgabe korrespondierende (gleiche oder unterschiedliche) Meldungen auszugeben. Eine visuelle und/oder akustische Meldung für wenigstens eine Ausgabeeinheit kann wenigstens einer Orts- und/oder Statusvorgabe gemäß einem Verkehrszeichenplan zugeordnet sein.

Die Ausgabeeinheit kann eine Anzeigeeinheit umfassen, um Informationen visuell wiederzugeben. Die Ausgabeeinheit kann eingerichtet sein, eine Meldung, wie die Warnmeldung, auf der Anzeigeeinheit visuell darzustellen. Beispielsweise kann die Anzeigeeinheit einen Bildschirm, ein Touch-Display, durch eine VR-Brille (Virtual Reality), eine AR-Brille (Augmented Reality), ein Handydisplay und/oder eine Smartwatch umfassen.

Die Ausgabeeinheit kann alternativ oder zusätzlich einen Lautsprecher umfassen, um eine Meldung akustisch wiederzugeben. Die Ausgabeeinheit kann eingerichtet sein, eine Meldung durch einen Lautsprecher akustisch wiederzugeben. Eine akustische Wiedergabe kann einen Ton, eine Tonabfolge, eine aufgenommene Stimme, oder eine synthetisch erzeugte Stimme oder eine beliebige Kombination hiervon umfassen.

Somit wird ein Verfahren bereitgestellt, das abhängig von der Position des Transportfahrzeugs wenigstens eine Meldung erzeugen und ausgegeben kann. Mithilfe des erfindungsgemäßen Verfahrens können Meldungen für die Teilnehmer des Fahrzeugverbandes wie auch andere Verkehrsteilnehmer bereitgestellt werden, um die Sicherheit des Schwerlasttransportverbands zu erhöhen. Durch Verwendung des erfindungsgemäßen Verfahrens wird ein Navigationsassistenzsystem realisiert, durch das die Belastung der Besatzung reduziert wird, sodass sich die Besatzung stärker auf das Fahren des Begleitfahrzeugs sowie auf Umgebung des Fahrzeugverbands einschließlich Verkehrsbauwerke, andere Verkehrsteilnehmer, etc. konzentrieren kann. Überaschenderweise hat sich herausgestellt, dass mit dem erfindungsgemäßen Verfahren die Aufgaben, welche typischerweise einem Beifahrer eines Begleitfahrzeugs auferlegt sind, teilweise oder sogar vollständig automatisiert werden können. Dadurch kann mit der gleichen Anzahl an Fachkräften bei Verbesserung der Sicherheit eine größere Anzahl Touren mit durchgeführt werden.

Es sei klar, dass das Verkehren entlang der vorbestimmten Strecke auch umfassen kann, dass das Transportfahrzeug von der vorbestimmten Strecke abweicht. Eine Abweichung von der vorbestimmten Strecke kann mit wenigstens einer Orts- und/oder Statusangabe assoziiert sein. Es kann bevorzugt sein, dass bei einer Abweichungs-Orts- und/oder - Statusangabe, die mit dem Transportfahrzeug assoziiert ist, eine entsprechende Orts- und/oder Statusvorgabe für das wenigstens eine Begleitfahrzeug selektiert wird, insbesondere um eine visuelle und/oder akustische Warnmeldung durch wenigstens eine Ausgabeeinheit des Begleitfahrzeugs zu veranlassen.

Gemäß einer bevorzugten Ausführung des erfindungsgemäßen Verfahrens wird als wenigstens eine Ausgabeeinheit eine in dem Begleitfahrzeug angeordnete Navigationsassistenzeinheit verwendet. Die in dem Begleitfahrzeug angeordnete Navigationsassistenzeinheit kann vorzugsweise ein Display, insbesondere ein Touch-Display, und/oder wenigstens einen Lautsprecher umfassen. Die in dem Begleitfahrzeug angeordnete Navigationsassistenzeinheit kann in dem Begleitfahrzeug, beispielsweise in dessen Armaturenbrett, eingebaut sein oder lösbar mit dem Begleitfahrzeug verbunden oder verbindbar sein. Als Orts- und/oder Statusvorgabe kann beispielsweise wenigstens eine Meldung gemäß eines Verkehrszeichenplans korrespondierend zu einer Stelle, die sich der Transportfahrzeug und/oder Fahrzeugverband nähert oder erreicht hat, für die Besatzung des Begleitfahrzeugs ausgegeben werden.

Zusätzlich oder alternativ kann gemäß einer Ausführung eines erfindungsgemäßen Verfahrens als wenigstens eine Ausgabeeinheit eine an, insbesondere auf, dem Begleitfahrzeug befestigte Verkehrszeichenanlage verwendet werden. Die Verkehrszeichenanlage kann dazu eingerichtet und ausgelegt sein, ein Verkehrszeichen oder mehrere Verkehrszeichen darzustellen. Zusätzlich oder alternativ kann die Verkehrszeichenanzeige dazu ausgelegt und eingerichtet sein, gemäß einem inaktiven Betriebszustand betrieben zu werden, in dem sie ein neutrales Zeichen, insbesondere ein neutrales Verkehrszeichen, oder kein Verkehrszeichen darstellt. Die Verkehrszeichenanzeige kann insbesondere dazu ausgelegt und eingerichtet sein, wenigstens ein Verkehrszeichen ausgewählt aus einer Gruppe umfassend genau zwei, genau drei, genau zwei, genau vier, mehr als vier, mehr als acht oder mehr als zwölf und/oder nicht mehr als 50, nicht mehr als 20, nicht mehr als 15, oder nicht mehr als zehn, unterschiedliche Verkehrszeichen auszugeben.

Eine vorbestimmte Gruppe von Verkehrszeichen zur Ausgabe an der Verkehrszeichenanzeige kann das Verkehrszeichen Gefahrenstelle (insbesondere Z 101), Überholverbot für Kraftfahrzeuge aller Art (insbesondere Z 276), und/oder Überholverbot für Kraftfahrzeuge mit einem zulässigen Gesamtgewicht über 3,5 t einschließlich Anhänger und Zugmaschinen (insbesondere Z 277) umfassen oder daraus bestehen. Eine Gruppe vorbestimmter Verkehrszeichen kann gewählt sein oder bestehen aus der Liste umfassend: Gefahrenstelle (insbesondere Z 101), Überholverbot für Kraftfahrzeuge aller Art (insbesondere Z 276), Überholverbot für Kraftfahrzeuge mit einem zulässigen Gesamtgewicht über 3,5 t einschließlich Jahr Anhänger und Zugmaschinen (insbesondere Z 277), vorgeschriebene Vorbeifahrt - links vorbei (insbesondere Z 222-10), vorgeschriebene Vorbeifahrt - rechts vorbei (insbesondere: Z 222-20), Durchfahrt verboten (insbesondere Z 250), zulässige Höchstgeschwindigkeit, insbesondere zulässige Höchstgeschwindigkeit 40 km/h (insbesondere Z 274-54), zulässige Höchstgeschwindigkeit 60 km/h (insbesondere Z 274-56), zulässige Höchstgeschwindigkeit 80 km/h (insbesondere Z 274-58), zulässige Höchstgeschwindigkeit 100 km/h (insbesondere Z274-60), oder zulässige Höchstgeschwindigkeit 120 km/h (insbesondere Z 274-62). Das Verkehrszeichen kann vorzugweise gemäß der StVO und/oder VzKat der Bundesrepublik Deutschland, insbesondere Version 2017, gestaltet sein.

Das Verkehrszeichen wird vorzugsweise abgebildet auf einer Grundfläche, insbesondere einer einfarbigen Grundfläche, vorzugsweise auf einer schwarzen oder weißen Grundfläche. Die Grundfläche hat insbesondere mit eine Grundflächenhöhe und/oder eine Grundflächenbreite von wenigstens 400 mm, insbesondere wenigstens 600 mm, vorzugsweise wenigstens 800 mm, und/oder nicht mehr als 2000 mm, insbesondere nicht mehr als 1500 mm, vorzugsweise nicht mehr als 1100 mm. Vorzugsweise umfasst die wenigstens eine Verkehrszeichenanzeige des wenigstens einen Begleitfahrzeus die Grundfläche.

Die Verkehrszeichenanzeige kann in einer Höhe von nicht weniger als 1000 mm, vorzugsweise nicht weniger als 2000 mm, oberhalb der Fahrbahn angeordnet sein, auf der das Begleitfahrzeug steht oder sich bewegt. Der Durchmesser des auf der Verkehrszeichenanzeige dargestellten Verkehrszeichen in einer runden Form oder die Kantenlänge eines eckigen Verkehrszeichens misst vorzugsweise wenigstens 500 mm, insbesondere wenigstens 700 mm, vorzugsweise wenigstens 900 mm, und/oder nicht mehr als 1500 mm, insbesondere nicht mehr als 1200 mm, vorzugweise nicht mehr als 1000 mm.

Gemäß einer bevorzugten Weiterbildung des Verfahrens kann die Statusvorgabe eine Ausrichtungsvorgabe umfassen. Das Betätigen der wenigstens einen Verkehrszeichenanzeige umfasst vorzugsweise, dass die Verkehrszeichenanzeige entsprechend der Ausrichtungsvorgabe ausgerichtet wird. Alternativ oder zusätzlich kann das Betätigen der wenigstens einen Verkehrszeichenanzeige umfassen, dass die Verkehrszeichenanzeige entsprechend der Ausrichtungsvorgabe gewählt wird. Beispielsweise kann das Begleitfahrzeug mit wenigstens einer beweglichen, insbesondere drehbaren oder schwenkbaren, Verkehrszeichenanzeige ausgestattet sein, die dazu ausgelegt und eingerichtet ist, eine von einer Vielzahl verschiedene Ausrichtungen selektiv einzunehmen. Beispielsweise kann eine Verkehrszeichenanzeige in Fahrtrichtung vorwärts, in Fahrtrichtung seitwärts nach rechts, in Fahrtrichtung seitwärts nach links oder in Fahrtrichtung rückwärts auf den nachfolgenden Verkehr ausgerichtet werden. Zusätzlich oder alternativ ist es denkbar, dass das Begleitfahrzeug mit mehreren Verkehrszeichenanzeige insbesondere bezüglich des Begleitfahrzeugs fixiert ausgestattet ist, die in Relation zu der Fahrtrichtung des Begleitfahrzeugs vordefinierte Ausrichtungen aufweisen. Beispielsweise kann eine Verkehrszeichenanzeige in Fahrtrichtung vorwärts, für den entgegenkommenden oder vorausfahrenden Verkehr ausgerichtet sein, in Bezug auf die Fahrtrichtung seitwärts nach links oder rechts, oder Bezug auf die Fahrtrichtung nach hinten, für den nachfolgenden Verkehr. Die mit dem Begleitfahrzeug assoziierte Statusvorgabe kann beispielsweise eine Ausrichtungsvorgabe korrespondierend zu einer vorbestimmten Stelle aufweisen, etwa korrespondierend zu einer in einer bezüglich des Fahrzeugverbands seitlichen Straßeneinmündung, zum Beispiel an der entsprechenden Seite des Begleitfahrzeugs und somit in Blickrichtung eines aus der Straßeneinmündung kommenden Verkehrsteilnehmers ausgerichtet sein.

Gemäß einer Ausführung eines erfindungsgemäßen Verfahrens wird eine Vielzahl verschiedener Ausgabeeinheiten eines Begleitfahrzeugs und/oder mehrerer Begleitfahrzeuge des Fahrzeugverbands an einer vorbestimmten Stelle veranlasst, unterschiedliche Meldungen auszugeben. Beispielsweise kann ein erstes Begleitfahrzeug dazu an veranlasst werden, ein erstes Verkehrszeichen an einer Anzeige dieses ersten Begleitfahrzeugs auszugeben und ein zweites Begleitfahrzeug kann veranlasst werden, mit seiner Verkehrszeichenanzeige ein anderes Verkehrszeichen auszugeben. Außerdem oder zusätzlich ist es denkbar, dass bei der vorbestimmten Stelle wenigstens eine in dem ersten Begleitfahrzeug angeordnete Ausgabeeinheit sowie wenigstens eine zweite an, insbesondere auf, diesem Begleitfahrzeug angeordnete Ausgabeeinheit zu verwenden, um assoziiert mit derselben vorbestimmten Stelle eine jeweilige Meldung auszugeben. Beispielsweise kann das wenigstens eine Begleitfahrzeug an einer in dem Begleitfahrzeug angeordneten Ausgabeeinheit eine visuelle und/oder akustische Meldung für die Besatzung ausgeben, um eine bestimmte Position an der vorbestimmten Strecke einzunehmen, und die Ausgabeeinheit dieses Begleitfahrzeugs kann veranlasst werden, bezüglich der gleichen vorbestimmten Stelle eine damit assoziierte Meldung, wie ein Verkehrszeichen, auszugeben. Es sei klar, dass mehrere verschiedene Ausgabeeinheiten in und/oder an dem gleichen und/oder unterschiedlichen Begleitfahrzeug(en) veranlasst werden können, an der vorbestimmten Stelle Meldungen auszugeben. Die Anzahl der Begleitfahrzeuge, deren jeweilige Ausgabeeinheit oder Ausgabeeinheiten der vorbestimmten Stelle veranlasst werden, jeweiligen Meldungen auszugeben, kann beispielsweise eins, zwei, drei, vier oder mehr betragen.

Gemäß einer Ausführung eines erfindungsmäßen Verfahrens fährt wenigstens ein erstes Begleitfahrzeug entlang der Strecke vor dem Transportfahrzeug. Insbesondere fährt wenigstens ein zweites Begleitfahrzeug entlang der Strecke hinter dem ersten Begleitfahrzeug. Das zweite Begleitfahrzeug kann hinter dem Transportfahrzeug fahren. Alternativ oder zusätzlich kann wenigstens ein drittes Begleitfahrzeug entlang der Strecke hinter dem Transportfahrzeug fahren. Das dritte Begleitfahrzeug fährt hinter dem ersten Begleitfahrzeug. Es ist denkbar, dass der Fahrzeugverband ein viertes sowie gegebenenfalls ein oder mehrere weitere Begleitfahrzeuge enthält, die entlang der Strecke vor oder hinter dem Transportfahrzeug sowie vor oder hinter dem ersten Transportfahrzeug fahren. Es sei klar, dass ein zweites, gegebenenfalls drittes, optionales viertes oder ein noch weiteres Begleitfahrzeug eine in Bezug auf das erste Begleitfahrzeug und/oder das Transportfahrzeug variable Positionierung in dem Transportverband einnehmen können. Beispielsweise kann ein zweites Begleitfahrzeug stets hinter dem ersten Begleitfahrzeug, jedoch zeitweise vor und zeitweise hinter dem Transportfahrzeug fahren. Bezüglich des ersten, zweiten, dritten und/oder vierten sowie gegebenenfalls weiteren Begleitfahrzeugs kann vorgesehen sein, dass stets eine maximale Abstandsvorgabe und/oder eine minimale Abstandsvorgabe in Bezug das Transportfahrzeug etwa nach vorne und/oder nach hinten einzuhalten ist.

Bei einer bevorzugten Ausführung des Verfahrens wird eine Distanz zwischen dem Begleitfahrzeug, insbesondere dem ersten, zweiten, dritten, vierten und/oder weiteren Begleitfahrzeug, und dem wenigstens einen Transportfahrzeug ermittelt. Die Distanz kann mit wenigstens einer Abstandsvorgabe verglichen werden. Die Absatzvorgabe ist vorzugsweise konstant und/oder korrespondierend zu einer Stelle oder einem Streckenabschnitt vorbestimmt. Es ist denkbar, dass sich die jeweilige Abstandsvorgabe bezüglich der Distanz zwischen einem ersten, zweiten, dritten, vierten oder anderen Begleitfahrzeug und dem Transportfahrzeug voneinander zumindest teilweise unterscheiden oder gleich sind. Es ist auch denkbar, dass wenigstens eine Abstandsvorgabe eines bestimmten (ersten, zweiten, dritten oder anderen) Begleitfahrzeugs an einer ersten Stelle sich von der Anstandsvorgabe an einer zweiten, dritten oder weiteren Stelle unterscheidet. Insbesondere kann an Streckenabschnitten zwischen sukzessive von dem Fahrzeugverband zu passierenden Stellen entlang der Strecke eine andere Abstandsvorgabe vorbestimmt sein als an zumindest einer anderen der Stellen. Bei einer Abweichung der Distanz von der wenigstens einen Abstandsvorgabe wird wenigstens eine an und/oder in dem Begleitfahrzeug angeordnete Ausgabeeinheit veranlasst, eine visuelle und/oder akustische Warnmeldung auszugeben. Zusätzlich kann vorgesehen sein, dass eine an und/oder in dem Transportfahrzeug angeordnete Ausgabeeinheit veranlasst wird, eine (weitere) visuelle und/oder akustische Meldung auszugeben.

Beispielsweise kann vorgesehen sein, dass ein, insbesondere erstes, Begleitfahrzeug eine Distanz gemäß einer Abstandsvorgabe von nicht mehr als 1000 m, insbesondere nicht mehr als 500 m, vorzugsweise nicht mehr als 300 m vor dem Transportfahrzeug haben darf. Alternativ oder zusätzlich kann vorgesehen sein, dass ein zweites Begleitfahrzeug eine zweite Abstandsvorgabe, die sich vorzugsweise von ersten Abstandsvorgabe unterscheidet, einzuhalten hat, welche nicht mehr als 800 m, insbesondere nicht mehr als 400 m, vorzugweise nicht mehr als 100 m, beträgt. Zusätzlich oder alternativ kann als Abstandsvorgabe vorbestimmt sein, dass das Begleitfahrzeug kontinuierlich vor oder hinter dem Transportfahrzeug anzuordnen ist. Wenn während dem Verkehren des Fahrzeugverbands entlang der Strecke festgestellt wird, dass ein Begleitfahrzeug eine Distanz zu dem Transportfahrzeug einnimmt, die von einer vorbestimmten Abstandsvorgabe abweicht, kann beispielsweise in diesem Begleitfahrzeug eine visuelle sowie gegebenenfalls zusätzlich eine akustische Warnmeldung ausgegeben werden, welche die Besatzung auf die Abweichung hinweist, und die gegebenenfalls mit einer Meldung assoziiert ist, welche die Besatzung auffordert, die Abstandsvorgabe einzuhalten, wobei insbesondere die Meldung eine Zusatzinformation, wie eine Richtungsangabe, eine Geschwindigkeitsangabe, oder ein Piktogramm, wie ein Pfeil, und/oder eine Bildbeschriftung, vorzugsweise ergänzt um einen entsprechende akustische Meldung, wie einen Signalton, eine Ansage, umfassen kann.

Bei einer bevorzugten Ausführung eines Verfahrens wird die vorbestimmte Strecke unter Berücksichtigung von Schwertransportdaten des Transportfahrzeugs konfiguriert. Diese Schwertransportdaten umfassen wenigstens eines von Folgendem: ein Gesamtgewicht, das 18 Tonnen übersteigt, eine Einzelachslast, die 10 Tonnen übersteigt, eine Breite, die 2,55 Meter übersteigt, eine Höhe, die 4 Meter übersteigt; und eine Länge, die 15,5 Meter übersteigt. Die Konfiguration der vorbestimmen Strecke erfolgt vorzugsweise, bevor der Fahrzeugverband entlang der vorbestimmten Strecke verkehrt. Bei einer zweckmäßigen Ausführung eines erfindungsmäßen Verfahrens umfasst die vorbestimmte Strecke Stellen, die unter Berücksichtigung von Infrastrukturdaten konfiguriert werden. Das Konfigurieren der vorbestimmten Strecke unter Berücksichtigung von Infrastrukturdaten erfolgt vorzugsweise vor dem Verkehren entlang der vorbestimmten Strecke. Die Infrastrukturdaten werden ausgewählt aus der Gruppe umfassend eine einseitige Zufahrt, eine Kreuzung, Kreisverkehr und eine Verkehrsinsel. Insbesondere werden die Infrastrukturdaten ausgewählt aus der Gruppe bestehend aus einer einseitigen Zufahrt (Straßeneinmündung), einer Kreuzung, einem Kreisverkehr und einer Verkehrsinsel.

Die Erfindung betrifft auch ein Meldesystem für wenigstens ein Begleitfahrzeug in einem entlang einer vorbestimmten Strecke verkehrenden Fahrzeugverband mit einem Transportfahrzeug. Das Meldesystem kann auch für mehrere Begleitfahrzeuge in einem entlang der vorbestimmen Strecke verkehrenden Fahrzeugverband mit einem Transportfahrzeug vorgesehen sein. Das Meldesystem umfasst wenigstens eine an oder in dem wenigstens einen Begleitfahrzeug angeordnete oder anordenbare Ausgabeeinheit, die dazu ausgelegt und eingerichtet ist, visuelle und/oder akustischer Meldungen auszugeben. Das Meldesystem umfasst weiterhin eine Speichervorrichtung zum Speichern einer vorgegebenen Strecke umfassend mehrere vorbestimmte Stellen, denen mit dem wenigstens einen Begleitfahrzeug assoziierte Orts- und/oder Statusvorgaben zugeordnet sind. Ferner umfasst das Meldesystem eine Prozessoreinheit oder mehrere Prozessoreinheiten, die dazu ausgelegt und eingerichtet ist bzw. sind, eine Orts- und/oder Statusvorgabe für das wenigstens eine Begleitfahrzeug abhängig von den vorbestimmten Stellen und einer mit dem Transportfahrzeug assoziierten Orts- und/oder Statusangabe zu selektieren. Die Prozessoreinheit ist signalübertragungsgemäß, beispielsweise kabelgebunden, per Funk, optisch, auf andere Weise oder durch eine Kombination verschiedener Medien, mit der Ausgabeeinheit verbunden. Die Prozessoreinheit ist signalübertragungsgemäß mit der Ausgabeeinheit verbunden, um die Ausgabeeinheit zum Ausgeben einer mit einer vorbestimmten Ausgabeinformationen assoziierten Meldung, insbesondere korrespondierend zu einer Orts- und oder Statusvorgabe, zu veranlassen. Vorzugsweise ist die Ausgabeeinheit des Meldesystems dazu ausgelegt, durch die Prozessoreinheit betätigt zu werden. Es sei klar, dass das Meldesystem mehrere Prozessoreinheiten umfassen kann.

Gemäß einer Ausführung eines erfindungsgemäßen Meldesystems umfasst die wenigstens eine Ausgabeeinheit wenigstens eine in dem Begleitfahrzeug angeordnete Navigationsassistenzeinheit. Zusätzlich oder alternativ kann bei einer Ausführung des Meldesystems die wenigstens eine Ausgabeeinheit wenigstens eine an, insbesondere auf, dem Begleitfahrzeug angeordnete Verkehrszeichenanzeige umfassen. Gemäß einer Weiterbildung der Erfindung umfasst die Ausgabeeinheit mehrere an dem Begleitfahrzeug unterschiedlich ausgerichtete Verkehrszeichenanzeigen oder die Verkehrszeichenanzeige ist beweglich, insbesondere drehbar. Bei einer Weiterbildung der Erfindung, gemäß der die Ausgabeeinheit beweglich ist, kann die wenigstens eine Prozessoreinheit dazu eingerichtet sein, die Verkehrszeichenanzeige gemäß einer Ausrichtungsvorgabe aus zu richten. Zusätzlich oder alternativ ist bei einem Meldesystem, bei dem die wenigstens eine Ausgabeeinheit unterschiedlich ausgerichtete Verkehrszeichenanzeigen umfasst, die wenigstens eine Prozessoreinheit dazu eingerichtet, die Verkehrszeichenanzeige gemäß der Ausrichtungsvorgabe auszuwählen.

Bei einer Ausführung eines erfindungsmäßen Meldesystems ist die Prozessoreinheit dazu eingerichtet, für eine Vielzahl verschiedener Anzeigeeinheiten abhängig von einer vorbestimmten Stelle unterschiedliche Meldungen vorzugeben. Die wenigstens eine Prozessoreinheit kann mehrere Prozessoreinheiten umfassen. Die Prozessoreinheiten können zumindest teilweise miteinander signalübertragungsgemäß verbunden sein. Beispielsweise können mehrere Prozessoreinheiten gemäß einer Ring-, Stern-, hierarchischen und/oder kaskadierten Struktur miteinander signalübertragungsgemäß verbunden sein. Die mehreren Prozessoreinheiten können an oder in dem gleichen Begleitfahrzeug angeordnet sein. Zusätzlich oder können alternativ mehrere Prozessoreinheiten innerhalb des Transportverbands verteilt, beispielsweise an unterschiedlichen Begleitfahrzeugen, und/oder außerhalb des Transportverbands angeordnet sein. Wenigstens eine der Prozessoreinheiten kann wenigstens einer oder mehreren Anzeigeeinheiten zugeordnet sein, die in dem gleichen Begleitfahrzeug angeordnet sind. Es ist denkbar, dass einer Prozessoreinheit, insbesondere eine Prozessoreinheit von mehreren Prozessoreinheiten, einer Vielzahl verschiedener Anzeigeeinheiten an unterschiedlichen oder in unterschiedlichen Begleitfahrzeugen zugeordnet ist.

Gemäß einer weiteren Ausführung eines erfindungsgemäßen Meldesystems ist die Prozessoreinheit dazu ausgelegt und eingerichtet, wenigstens eine jeweilige Orts- und/oder Statusvorgabe für mehrere Begleitfahrzeuge des Fahrzeugverbandes zu selektieren. Wenigstens eine Prozessoreinheit kann dazu eingerichtet sein, wenigstens eine jeweilige Orts- und/oder Statusvorgabe für ein erstes und ein zweites Begleitfahrzeug des Fahrzeugverbands sowie gegebenenfalls für ein drittes, viertes oder weitere Begleitfahrzeuge des Fahrzeugverbands selektieren. Insbesondere kann die Prozessoreinheit dazu eingerichtet sein, wenigstens eine jeweilige Orts- und/oder Statusvorgabe für mehrere Begleitfahrzeuge des Fahrzeugverbands abhängig von derselben vorbestimmten Stelle zu selektieren. Es sei klar, dass die Prozessoreinheit dazu eingerichtet sein kann, Orts- und/oder Statusvorgaben für mehrere Begleitfahrzeuge des Fahrzeugverbands abhängig von einer Vielzahl vorbestimmter Stellen der vorgegebenen Strecke zu selektieren. Die wenigstens eine Prozessoreinheit kann zu diesem Zweck signalübertragungsgemäß mit einer Einrichtung, die in der Prozessoreinheit eine Orts- und/oder Statusangabe des Transportfahrzeug bereitstellt, verbunden sein. Beispielsweise kann die wenigstens eine Prozessoreinheit zum Selektieren von einer Orts- und/oder Statusvorgabe für ein Begleitfahrzeug auf mehrere Begleitfahrzeuge des Fahrzeugverbands signalübertragungsgemäß mit einer Positionserfassungseinheit des Transportfahrzeugs verbunden sein. Bei einer weiteren Ausführung eines Meldesystems gemäß der Erfindung umfasst diese wenigstens eine Positionserkennungsvorrichtung zum Erfassen einer mit dem Transportfahrzeug assoziierten Ortsangabe. Die wenigstens eine Prozessoreinheit ist dazu ausgelegt, diese Ortsangabe von der Positionserkennungsvorrichtung zu empfangen.

Zusätzlich oder alternativ kann bei einer bevorzugten Ausführung des Meldesystems die wenigstens eine Prozessoreinheit dazu ausgelegt sein, die Statusangabe, insbesondere von dem Transportfahrzeug, zu empfangen. Es ist denkbar, dass die Statusangabe zum Empfangen durch die Prozessoreinheit durch eine andere Einrichtung bereitgestellt wird, die Teil des Transportverbands sein kann, beispielsweise an oder in einem Begleitfahrzeug angeordnet ist. Alternativ kann die Statuserfassungseinheit eine Statusangabe betreffend das Transportfahrzeug von einer zentralen Navigationsleitzentrale oder dergleichen empfangen.

Gemäß einer Ausführung eines Meldesystems ist die wenigstens eine Prozessoreinheit dazu eingerichtet, bei einer Abweichung einer, insbesondere gemessenen oder berechneten, Distanz zwischen dem Transportfahrzeug und dem wenigstens einen Begleitfahrzeug von einer Abstandsvorgabe wenigstens eine an und/oder in dem Begleitfahrzeug angeordnete Ausgabeeinheit, zur Ausgabe einer visuellen und/oder akustischen Warnmeldung zu veranlassen. Die wenigstens eine Prozessoreinheit ist vorzugweise dazu ausgelegt und eingerichtet, eine Distanz zwischen dem Transportfahrzeug und dem wenigstens einen Begleitfahrzeug zu ermitteln. Alternativ oder zusätzlich kann die Prozessoreinheit dazu ausgerichtet sein, einen Vergleich zwischen einer ermittelten Distanz und einer Abstandsvorgabe anzustellen, wobei die Abstandsvorgabe an die Prozessoreinheit von wenigstens einer Speichereinheit bereitgestellt sein kann. Die Ermittlung der Distanz, insbesondere durch die Prozessoreinheit, kann beispielsweise erfolgen, indem mit einer Positionserfassungseinheit zum Erfassen der Position des Transportfahrzeugs sowie gegebenenfalls einer weiteren Positionserfassungseinheit zum Erfassen einer aktuellen Position des wenigstens einen Begleitfahrzeugs, Positionsdaten, vorzugweise in einem kartographischen Raum, beispielsweise mithilfe eines GPS-Navigationssystems, für die Prozessoreinheit bereitgestellt werden. Durch die Prozessoreinheit kann anhand Positionsdaten eine Distanz berechnet werden. Alternativ kann es denkbar sein, dass ein Sensorsystem, das insbesondere an dem mindestens einen Begleitfahrzeug und/oder an dem Transportfahrzeug angeordnet sein kann, eine Distanz gemessen und an die wenigstens eine Prozessoreinheit bereitgestellt wird. Die wenigstens eine Prozessoreinheit kann dazu eingerichtet sein, eine Abstandsvorgabe in Abhängigkeit von der vorgegebenen Strecke, insbesondere in Abhängigkeit von einer oder mehreren der vorbestimmten Stellen oder gegebenenfalls abhängig vom Streckenabschnitt zu berücksichtigen. Insbesondere ist es denkbar, dass die Prozessoreinheit dazu ausgelegt und eingerichtet ist, im Verlauf der Strecke dem Vergleich abhängig von einem jeweiligen Streckenabschnitt und/einer Stelle, wo sich der das jeweilige Begleitfahrzeug und/oder das Transportfahrzeug befindet, eine jeweilige assoziierte Abstandsvorgabe zu Grunde zu legen.

Die Erfindung betrifft auch ein Begleitfahrzeug in einem Fahrzeugverband oder für einen Fahrzeugverband mit einem Transportfahrzeug, wobei das Begleitfahrzeug ein Meldesystem wie oben beschrieben umfasst und/oder wenigstens eine Ausgabeeinheit an oder in dem Begleitfahrzeug umfasst, deren Betätigung gemäß dem oben beschriebenen Verfahren erfolgt.

Insbesondere ist das erfindungsgemäße Meldesystem ausgelegt und eingerichtet, wenigstens eine Ausgabeeinheit zu umfassen, die gemäß dem oben beschriebenen Verfahren betätigt wird. Zusätzlich oder alternativ kann das wenigstens eine Verfahren zum Betätigen wenigstens einer Ausgabeeinheit des erfindungsgemäßen Meldesystems verwendet werden.

Die Erfindung betrifft außerdem einen Fahrzeugverband, der wenigstens ein Transportfahrzeug und wenigstens ein Begleitfahrzeug umfasst. Der Fahrzeugverband kann wenigstens zwei Begleitfahrzeug umfassen. Alternativ kann der Fahrzeugverband drei oder mehr Begleitfahrzeuge umfassen. Bevorzugt umfasst der Fahrzeugverband wenigstens ein Begleitfahrzeug, das wie oben beschrieben ausgeführt ist. Der Fahrzeugverband umfasst wenigstens ein Begleitfahrzeug mit wenigstens einem Meldesystem wie oben beschrieben. Alternativ oder zusätzlich umfasst der Fahrzeugverband wenigstens eine Ausgabeeinheit, insbesondere eine Vielzahl von Ausgabeeinheiten, deren Betätigung nach dem oben beschriebenen Verfahren erfolgt.

Gemäß einer Ausführung eines erfindungsgemäßen Fahrzeugverbands umfasst dieser eine Positionserkennungsvorrichtung zum Erfassen einer mit dem Transportfahrzeug assoziierten Position des Transportfahrzeugs, insbesondere in einem kartographischen Raum. Vorzugsweise ist bei dem Fahrzeugverband die wenigstens eine Positionserkennungsvorrichtung in das Transportfahrzeug integriert, oder zumindest an dem Transportfahrzeug befestigt. Die Positionserkennungsvorrichtung ist vorzugweise dazu ausgelegt und eingerichtet, die Orts- und/oder Statusangabe für das Meldesystem oder das Verfahren zu erzeugen.

Das Transportfahrzeug des Fahrzeugverbandes kann als Gefahrengut- und/oder Schwerlasttransportfahrzeug bezeichnet sein. Das Transportfahrzeug kann insbesondere ein Gesamtgewicht aufweisen, welches 18 Tonnen, insbesondere 20 Tonnen, 25 Tonnen, 40 Tonnen, 50 Tonnen, 100 Tonnen, 200 Tonnen, 500 Tonnen, oder 1000 Tonnen, übersteigt. Das Gesamtgewicht des Transportfahrzeugs kann bis zu 500 Tonnen, insbesondere bis zu 1000 Tonnen, bis zu 1500 Tonnen, bis zu 2000 Tonnen, bis zu 3000 Tonnen, bis zu 4000 Tonnen oder bis zu 5000 Tonnen, betragen.

Das Transportfahrzeug kann insbesondere eine Einzelachslast aufweisen, welche 10 Tonnen, insbesondere 15 Tonnen, 20 Tonnen, 40 Tonnen, 50 Tonnen, 100 Tonnen oder 200 Tonnen, übersteigt. Die Einzelachslast des Transportfahrzeugs kann bis zu 100 Tonnen, insbesondere bis zu 200 Tonnen, bis zu 500 Tonnen, bis zu 1000 Tonnen, bis zu 2000 Tonnen oder bis zu 4000 Tonnen, betragen.

Das Transportfahrzeug kann insbesondere eine Breite aufweisen, welche 2,55 Meter übersteigt. Die Breite des Transportfahrzeugs kann mindestens 2,6 Meter, insbesondere mindestens 3 Meter, mindestens 3,5 Meter, mindestens 4 Meter oder mindestens 5 Meter, betragen. Die Breite des Transportfahrzeugs kann bis zu 4 Meter, insbesondere bis zu 5 Meter, bis zu 7 Meter, bis zu 10 Meter, bis zu 20 Meter, bis zu 50 Meter oder bis zu 100 Meter, betragen.

Das Transportfahrzeug kann insbesondere eine Höhe aufweisen, welche 4 Meter übersteigt. Insbesondere kann die Höhe des Transportfahrzeugs 4,5 Meter, 5 Meter, 7 Meter, 10 Meter, 20 Meter oder 50 Meter übersteigen. Insbesondere kann die Höhe des Transportfahrzeugs bis zu 10 Meter, bis zu 20 Meter, bis zu 50 Meter, bis zu 100 Meter, bis zu 200 Meter oder bis zu 500 Meter betragen.

Das Transportfahrzeug kann insbesondere eine Länge aufweisen, welche 15,5 Meter übersteigt. Insbesondere kann die Länge des Transportfahrzeugs 18 Meter, 20 Meter, 25 Meter, 30 Meter, 40 Meter, 50 Meter, 100 Meter oder 200 Meter übersteigen. Insbesondere kann die Länge des Transportfahrzeugs bis zu 200 Meter, bis zu 300 Meter, bis zu 400 Meter, bis zu 500 Meter oder bis zu 1000 Meter betragen.

Zur Durchführung des Verfahrens und/oder als Teil des Meldesystems kann wenigstens eine Prozessoreinheit und/oder wenigstens eine Speichervorrichtung vorgesehen sein, die ein verteiltes Computersystem realisiert. Das verteilte System kann mehrere Computereinrichtungen umfassen. Die Computereinrichtungen können PCs, mobile Endgeräte und/oder mobile Computereinrichtungen, wie Tablets, umfassen. Das Verfahren zum Betätigen wenigstens einer Ausgabeeinheit ist vorzugsweise ein computerimplementiertes Verfahren. Bei einem Fahrzeugverband mit einem Transportfahrzeug und einem oder mehreren Begleitfahrzeugen können Meldungen simultan über ein verteiltes Computersystem bei den mehreren Begleitfahrzeugen sowie gegebenenfalls den Transportfahrzeug ausgegeben, insbesondere angezeigt, werden. Eines oder mehrere Begleitfahrzeuge können kommunikativ mit dem Transportfahrzeug verbunden sein, um ein verteiltes Computersystem oder einen Teil eines verteilten Computersystems zu realisieren. Es kann ein entsprechendes Kommunikationsnetzwerk zwischen dem wenigstens einen Begleitfahrzeug, vorzugsweise mehrere Begleitfahrzeugen, und dem Transportfahrzeug, sowie gegebenenfalls einer zentralen Leiteinrichtung oder dergleichen bereitgestellt sein.

Das verteilte Computersystem kann ein Clientsystem und ein Serversystem umfassen, die kommunikativ mit einer gekoppelt sind. Das Clientsystem und/oder das Serversystem des verteilten Computersystems können zur Ausführung eines computerimplementierten Verfahrens eingerichtet sein. Das Clientsystem und/oder das Serversystem umfasst wenigstens eine Speichervorrichtung und die Speichervorrichtung kann zum Speichern und/oder Bereitstellen wenigstens eines der folgenden ausgelegt und eingerichtet sein: eine Karte, Transportdaten, Tragstruktur Daten, wenigstens einer ersten vorbestimmten Strecke, mehrere Stellen sowie gegebenenfalls wenigstens einem Streckenabschnitt.

Ein computerimplementiertes Verfahren kann sich auf eine oder mehrere Verfahrensschritte, oder Operationen, beziehen, die logisch, sequenziell oder auf sonstige Weise mit einander verknüpft sein können und von einem Computer, einem Computernetzwerk, einem Server-Client-System oder anderen herkömmlichen programmierbaren und/oder digitalen Vorrichtungen ausführbar sind. Insbesondere können manche oder alle Verfahrensschritte eines computerimplementierten Verfahrens automatisch, zum Beispiel ohne Zutun oder Eingriff durch einen menschlichen Benutzer, ausführbar sein. Die Operationen können als maschinenlesbare Anweisungen ausgeführt sein. Zum Beispiel können die Operationen als maschinenlesbare Anweisungen in einem Quellcode, Objektcode aus für Baucode oder anderen Formaten existieren. Im Folgenden werden die Begriffe Verfahrensschritte, Operationen und Anweisungen mit Bezug das computerimplementierte Verfahren, sofern nichts anderes angegeben, als austauschbare Synonyme verwendet. Die Zuordnung einer Orts- und/oder Statusvorgabe zu einer vorbestimmten Stelle kann vorzugsweise mittels einer Operation erfolgen. Das Erfassen einer Orts- und/oder Statusangabe erfolgt vorzugsweise durch wenigstens eine Operation. Das Selektieren einer Orts- und/oder Statusvorgabe abhängig von einer mit dem Transportfahrzeug assoziierten Orts- und/oder Statusangabe und den vorbestimmten Stellen erfolgt vorzugweise durch wenigstens eine Operation. Das Veranlassen wenigstens einer Ausgabeeinheit zum Ausgeben einer visuellen und/oder akustischen Meldungen kann durch eine oder mehrere Operationen erfolgen. Eine Zuordnung wenigstens einer Meldung zu einer (insbesondere selektierten) Orts- und/oder Statusvorgabe kann vorzugsweise durch wenigstens eine Operation erfolgen. Die unterschiedlichen Schritte des erfindungsmäßen Verfahrens können durch je eine oder mehrere Operationen durchgeführt werden.

Das computerimplementierte Verfahren sowie seine Anweisungen können beispielsweise als ein Dienstprogramm, Programm oder Unterprogramm auf einem computerlesbaren Speichermedium und/oder auf einer Hardware gespeichert sein. Das computerlesbare Speichermedium kann eine beliebiges Speichermedium sein, das geeignet ist, dem computerimplementierte Verfahren, eine Anweisung bereitzustellen. Das computerlesbare Medium kann ein nichtflüchtiges Speichermedium umfassen, wie beispielsweise eine optische oder magnetische Platte. Alternativ oder zusätzlich kann das computerlesbare Medium ein flüchtiges Medium umfassen, die beispielsweise einen elektronischen oder elektrischen Daten-, Arbeit- oder Hauptspeicher. Das computerlesbare Medium kann weitere maschinenlesbare Anweisungen zusätzlich zu den Anweisungen des computerimplementierten Verfahrens zu speichern. Beispielsweise kann das computerlesbare Medium Anweisungen speichern, die von einem Netzwerk oder dem Internet heruntergeladen werden.

Eine Karte kann eine digitale, verkleinerte Darstellung eines geographischen oder topographischen Gebietes sein. Das in der Karte dargestellte Gebiet kann vordefiniert sein. Beispielsweise kann die Karte das Gebiet der Bundesrepublik Deutschland, von Europa, oder ein beliebiges anderes Gebiet der Welt darstellen. Die Karte kann beispielsweise Straßen, Wege, Bahnlinien, Verläufe von Gewässern, Höhenprofile, politische oder sonstige Gebietsgrenzen beinhalten. Beispielsweise kann die Karte zwischen unterschiedlichen Straßentypen grafisch differenzieren. Beispielsweise Straßentypen umfassen Autobahnen, autobahnähnliche Straßen, Fernverkehrsstraßen, Straßen, Autostraßen, Europa-, Bundes-, Land-, Staats-, Kreis-, Gemeinde- und Ortsstraßen, Ortsdurchfahrt, Feld- und Waldwege, Fahrradwege, Fußwege und/oder Fußgängerzonen. Des Weiteren können die Straßen nach Straßenkategorien, nach Straßenbaulastträger oder nach gesetzlichen Regelungen eingeteilt sein.

Die Karte kann als eine digitale Karte bereitgestellt sein. Die Karte kann eine Rasterkarte oder eine Vektorkarte sein. Die Karte kann als offline-Karte auf einzelnen Endgeräten oder Client-Einrichtungen bereitgestellt sein (insbesondere einem Navigationsassistenzsystem) oder als online-Karte von einem und/oder über ein Netzwerk, von einem Server, von einer Cloud oder sonstigen Einrichtungen abrufbar sein. Die Karte kann als eine einzige Karte bereitgestellt sein und/oder sich aus mehreren Karten oder Kartenabschnitten zusammensetzen.

Die Strecke kann einen Startpunkt und/oder einen Zielpunkt aufweisen. Vorzugsweise umfasst die Strecke sowohl einen Startpunkt als auch einen Zielpunkt. Der Startpunkt kann einen geographischen oder topographischen Ort kennzeichnen, an dem der Fahrzeugverband einen Transport entlang der Strecke beginnt. Der Zielpunkt kann einen geographischen oder topographischen Ort kennzeichnen, an dem der Transport des Fahrzeugverbandes, insbesondere des Transportfahrzeugs, endet.

Das Bestimmen des Startpunkts und/oder des Zielpunkts insbesondere in der Karte erfolgt vorzugsweise zeitlich vor dem Verkehrenden Fahrzeug, oder Transportverbands entlang der Strecke. Für das Bestimmen des Startpunkts und des Zielpunkts in der Karte kann eine Benutzerschnittstelle bereitgestellt werden, über welche ein Benutzer den Start- und den Zielpunkt eingeben kann. Weitere Zwischenpunkt oder Stellen können ebenfalls durch die Benutzer eingegeben werden. Die Eingabe des Startpunkts, des Zielpunkts sowie weiterer Zwischenpunkt oder Streckenabschnitte kann über beliebige Eingabegeräte, zum Beispiel Maus, Keyboard oder Touchscreen, erfolgen. Alternativ oder zusätzlich können die Anschriften des Startpunkts, des Zielpunkts, weiterer Zwischenpunkte oder stellen und/oder von Streckenabschnitten, von einer Datenbank abgerufen oder über eine Plattform oder als ein Formular empfangen werden. In weiteren Beispielen können der Startpunkt, der Zielpunkt, mehrere Stellen (Zwischenpunkte) und/oder Streckenabschnitte auf der Karte, zum Beispiel über einen Touchscreen, ausgewählt werden. Der Startpunkt, Zielpunkt, weitere Stellen und/oder Streckenabschnitte können in der Karte grafisch dargestellt werden.

Transportdaten umfassen beispielsweise die Abmessungen und/oder das Gewicht des Transportfahrzeugs mit oder ohne Transportgut. Die Transportdaten können von Spezifikationen des Transportfahrzeugs samt Transportgut abhängen, die insbesondere eine Breite, eine Höhe, eine Länge, eine Achslast und/oder ein Gewicht betreffen. Die Achslast kann sich auf eine beliebige Achse des Transportfahrzeugs beziehen.

Beispielsweise umfassen die Transportdaten die Abmessungen eines Transportfahrzeugs mit oder ohne dem Transportgut, das zu transportieren ist. In einem konkreten Beispiel können die Transportdaten umfassen: eine Gesamtlänge von 10 m bis 200 m, eine Breite von 2 m bis 200 m, eine Höhe von 2 m bis 100 m, eine Achslast von 1 t bis 500 t und ein Gewicht von 10 t bis 1000 t. In einem weiteren Beispiel beträgt die Gesamtlänge 20 m bis 50 m. Die Gesamthöhe kann 3 m bis 10 m betragen. Das Gesamtgewicht kann 40 t bis 500 t betragen. Ferner können die Transportdaten die Größe des Wendekreises des wenigstens einen Transportfahrzeugs beinhalten. Der Wendekreis kann aus den vorhandenen Transportdaten berechnet und berechenbar sein.

Das Erfassen der Transportdaten kann per Eingabe über eine Benutzerschnittstelle mittels geeigneter Eingabegeräte erfolgen. Alternativ oder zusätzlich können die Transportdaten von einer Datenbank, einem Server oder einer Cloud abgerufen werden. Die Transportdaten können ferner über ein Netzwerk oder eine Plattform abgerufen werden. Die Transportdaten können als eine vordefinierte Datenstruktur und/oder in einem bestimmten Datenformat empfangen werden.

Die mindestens eine vorbestimmte Strecke kann eine beliebige topographische Verbindung zwischen dem Startpunkt und dem Zielpunkt umfassen. Die vorbestimmte Strecke kann basierend auf den Informationen aus der bereitgestellten Karte bestimmt werden. Für das Ermitteln der mindestens einen ersten Strecke kann ein geeigneter Algorithmus verwendet werden, vorzugsweise vor dem verkehrenden Fahrzeugverbands entlang der Strecke. Beispielsweise kann die wenigstens eine Strecke basierend auf einem oder mehreren der folgenden bestimmt werden: eine Streckenbemaßung, eigens erfasste Daten eines Benutzers, Daten aus einer Datenbank des Anbieters eines Navigationssystems, Daten aus einer Datenbank eines Vertreibers oder Administrators des computerimplementierten Verfahrens, Daten eines Drittanbieters, öffentlich zugänglichen Daten, amtlichen und/oder behördliche Daten und/oder Daten aus vergangenen Transporten.

## Patentansprüche

1. Verfahren zum Betätigen wenigstens einer Ausgabeeinheit wenigstens eines Begleitfahrzeugs aus einem Fahrzeugverband mit einem Transportfahrzeug, während der Fahrzeugverband entlang einer vorbestimmten Strecke verkehrt, die vorbestimmte Stellen umfasst, denen mit dem wenigstens einen Begleitfahrzeug assoziierte Orts- und/oder Statusvorgaben zugeordnet sind,
wobei eine mit dem Transportfahrzeug assoziierte Orts- und/oder Statusangabe erfasst wird,
wobei für das Begleitfahrzeug wenigstens eine Orts- und/oder Statusvorgabe abhängig von der mit dem Transportfahrzeug assoziierten Orts- und/oder Statusangabe und den vorbestimmten Stellen selektiert wird, und
wobei wenigstens eine an und/oder in dem Begleitfahrzeug angeordnete Ausgabeeinheit veranlasst wird, eine zu der selektierten Orts- und/oder Statusvorgabe korrespondierende, visuelle und/oder akustische Meldung auszugeben.

2. Verfahren nach Anspruch 1, wobei als wenigstens eine Ausgabeeinheit eine in dem Begleitfahrzeug angeordnete Navigationsassistenzeinheit verwendet wird und/oder wobei als wenigstens eine Ausgabeeinheit eine an, insbesondere auf, dem Begleitfahrzeug befestigte Verkehrszeichenanzeige verwendet wird.

3. Verfahren nach Anspruch 2, wobei die Statusvorgabe eine Ausrichtungsvorgabe umfasst und wobei das Betätigen der wenigstens Verkehrszeichenanzeige umfasst, dass die Verkehrszeichenanzeige entsprechend der Ausrichtungsvorgabe ausgerichtet und/oder gemäß der Ausrichtungsvorgabe ausgewählt wird.

4. Verfahren nach einem der vorstehenden Ansprüche, wobei eine Vielzahl verschiedener Ausgabeeinheiten eines Begleitfahrzeugs und/oder mehrerer Begleitfahrzeuge des Fahrzeugverbandes an einer vorbestimmten Stelle veranlasst werden, unterschiedliche Meldungen auszugeben.

5. Verfahren nach einem der vorstehenden Ansprüche, wobei
wenigstens ein erstes Begleitfahrzeug entlang der Strecke vor dem Transportfahrzeug fährt, wobei insbesondere wenigstens ein zweites Begleitfahrzeug entlang der Strecke hinter dem ersten Begleitfahrzeug fährt und/oder wobei
wenigstens ein drittes Begleitfahrzeug entlang der Strecke hinter dem Transportfahrzeug fährt.

6. Verfahren nach einem der vorstehenden Ansprüche, wobei eine Distanz zwischen dem Transportfahrzeug und dem wenigstens einen Begleitfahrzeug ermittelt wird und wobei die Distanz mit wenigstens einer Abstandsvorgabe verglichen wird, wobei bei einer Abweichung der Distanz von der wenigstens einen Abstandsvorgabe wenigstens eine an und/oder in dem Begleitfahrzeug angeordnete Ausgabeeinheit veranlasst wird, eine visuelle und/oder akustische Warnmeldung auszugeben.

7. Meldesystem für wenigstens ein Begleitfahrzeug in einem entlang einer vorbestimmen Strecke verkehrenden Fahrzeugverband mit einem Transportfahrzeug, umfassend:
wenigstens eine an oder in einem Begleitfahrzeug angeordnete oder anordenbare Ausgabeeinheit eingerichtet zum Ausgeben visueller und/oder akustischer Meldungen, und
eine Speichervorrichtung zum Speichern einer vorgegebenen Strecke umfassend mehrere vorbestimmte Stellen, denen mit dem wenigstens einen Begleitfahrzeug assoziierte Orts- und/oder Statusvorgaben zugeordnet sind,
eine Prozessoreinheit eingerichtet zum Selektieren einer Orts- und/oder Statusvorgabe für das wenigstens eine Begleitfahrzeug abhängig von den vorbestimmten Stellen und einer mit dem Transportfahrzeug assoziierten Orts- und/oder Statusangabe,
wobei die Prozessoreinheit signalübertragungsgemäß mit der Ausgabeeinheit verbunden ist, um die Ausgabeeinheit zum Ausgeben einer mit einer bestimmten Ausgabeinformation assoziierten Meldung zu veranlassen.

8. Meldesystem nach Anspruch 7, wobei die wenigstens eine Ausgabeeinheit wenigstens eine in dem Begleitfahrzeug angeordnete Navigationsassistenzeinheit umfasst und/oder wobei die wenigstens eine Ausgabeeinheit wenigstens eine an, insbesondere auf, dem Begleitfahrzeug angeordnete Verkehrszeichenanzeige umfasst.

9. Meldesystem nach Anspruch 8, wobei die Ausgabeeinheit mehrere an dem Begleitfahrzeug unterschiedlich ausgerichtete Verkehrszeichenanzeigen umfasst oder wobei die Verkehrszeichenanzeige beweglich, insbesondere drehbar, ist, und wobei die Prozessoreinheit dazu eingerichtet ist, die Verkehrszeichenanzeige gemäß einer Ausrichtungsvorgabe auszuwählen oder auszurichten.

10. Meldesystem nach einem der Ansprüche 7 bis 9, wobei die Prozessoreinheit dazu eingerichtet ist, für eine Vielzahl verschiedener Anzeigeeinheiten abhängig von einer vorbestimmten Stelle unterschiedliche Meldungen vorzugeben.

11. Meldesystem nach einem der Ansprüche 7 bis 10, wobei die Prozessoreinheit eingerichtet ist zum Selektieren wenigstens einer jeweiligen Orts- und/oder Statusvorgabe für mehrere Begleitfahrzeuge des Fahrzeugverbandes.

12. Meldesystem nach einem der Ansprüche 7 bis 11, ferner umfassend eine Positionserkennungsvorrichtung zum Erfassen einer mit dem Transportfahrzeug assoziierten Ortsangabe, wobei die wenigstens eine Prozessoreinheit dazu ausgelegt ist, die Ortsangabe von der Positionserkennungsvorrichtung zu empfangen.

13. Meldesystem nach einem der Ansprüche 7 bis 12, wobei die wenigstens eine Prozessoreinheit dazu ausgelegt ist, die Statusangabe, insbesondere von dem Transportfahrzeug, zu empfangen und/oder wobei wenigstens eine Prozessoreinheit eingerichtet ist, bei einer Abweichung einer, insbesondere gemessenen oder berechneten, Distanz zwischen dem Transportfahrzeug und dem wenigstens einen Begleitfahrzeug von einer Abstandsvorgabe wenigstens eine an und/oder in dem Begleitfahrzeug angeordnete Ausgabeeinheit zur Ausgabe einer visuellen und/oder akustischen Warnmeldung zu veranlassen.

14. Begleitfahrzeug in einem Fahrzeugverband mit einem Transportfahrzeug, wobei das Begleitfahrzeug ein Meldesystem nach einem der Ansprüche 7 bis 13 umfasst und/oder wenigstens eine Ausgabeeinheit an oder in dem Begleitfahrzeug, deren Betätigung nach einem Verfahren gemäß einem der Ansprüche 1 bis 6 erfolgt.

15. Fahrzeugverband umfassend ein Transportfahrzeug und wenigstens ein Begleitfahrzeug, wenigstens zwei, drei oder mehr Begleitfahrzeuge, insbesondere nach Anspruch 14, umfassend wenigstens ein Meldesystem nach einem der Ansprüche 7 bis 13 und/oder wenigstens eine Ausgabeeinheit, insbesondere eine Vielzahl Ausgabeeinheiten, deren Betätigung nach einem Verfahren gemäß einem der Ansprüche 1 bis 6 erfolgt.

16. Fahrzeugverband nach Anspruch 15, umfassend eine, insbesondere in das Transportfahrzeug integrierte, Positionserkennungsvorrichtung zum Erfassen einer mit dem Transportfahrzeug assoziierten Position, insbesondere in einem kartographischem Raum umfasst und wobei die Positionserkennungsvorrichtung dazu eingerichtet ist, die Orts- oder Statusangabe für das Meldesystem oder das Verfahren zu erzeugen.
